# EUROPÄISCHE PATENTSCHRIFT

(11) **EP 2 596 856 B1**
(45) Veröffentlichungstag und Bekanntmachung des Hinweises auf die Patenterteilung: **14.05.2014**
(21) Anmeldenummer: 12007467.9
(22) Anmeldetag: 02.11.2012
(51) Int. Cl.: B01F 11/00, B01F 13/00, B01F 15/00, F04B 9/127, F04B 53/12, A61B 17/88

(54) **Vorrichtung zum Mischen von Knochenzement**
Device for mixing bone cement
Dispositif de mélange de ciment osseux

(30) Priorität: 25.11.2011 DE 102011119371
(43) Veröffentlichungstag der Anmeldung: 29.05.2013
(73) Patentinhaber: Heraeus Medical GmbH, 61273 Wehrheim (DE)
(72) Erfinder: Vogt, Sebastian, 99092 Erfurt (DE); Schnieber, Tim, 60439 Frankfurt (DE)
(74) Vertreter: Panten, Kirsten

(56) Entgegenhaltungen:
- WO-A1-99/42205
- DE-B3-102009 031 178
- GB-A- 1 300 093
- SU-A2- 960 022
- US-A- 4 671 263

## Beschreibung

Gegenstand der Erfindung ist eine Vorrichtung zum Mischen von Knochenzement, insbesondere von PMMA-Knochenzement (Polymethylmethacrylat-Knochenzement).

PMMA-Knochenzemente sind seit Jahrzehnten bekannt und gehen auf die grundlegenden Arbeiten von Sir Charnley zurück (Charnley, J.: Anchorage of the femoral head prosthesis of the shaft of the femur. J. Bone Joint Surg. 42 (1960) 28-30). Der Grundaufbau der PMMA-Knochenzemente ist seitdem prinzipiell gleich geblieben. PMMA-Knochenzemente bestehen aus einer flüssigen Monomerkomponente und einer Pulverkomponente. Die Monomerkomponente enthält Im Allgemeinen das Monomer Methylmethacrylat und einen darin gelösten Aktivator (N,N-Dimethyl-p-toluidin). Die Pulverkomponente besteht aus einem oder mehreren Polymeren, die auf Basis von Methylmethacrylat und Comonomeren, wie Styren, Methylacrylat oder ähnlichen Monomeren durch Polymerisation, vorzugsweise Suspensionspolymerisation, hergestellt sind, einem Röntgenopaker und dem Initiator Dibenzoylperoxid. Beim Vermischen der Pulverkomponente mit der Monomerkomponente entsteht durch Quellung der Polymere der Pulverkomponente im Methylmethacrylat ein plastisch verformbarer Teig. Bei dem Vermischen der Pulverkomponente mit der Monomerkomponente reagiert der Aktivator N,N-Dimethyl-p-toluidin mit dem Dibenzoylperoxid, das unter Bildung von Radikalen zerfällt. Die gebildeten Radikale initiieren die radikalische Polymerisation des Methylmethacrylates. Mit fortschreitender Polymerisation des Methylmethactylates erhöht sich die Viskosität des Zementteigs bis der Zementteig erstarrt und damit ausgehärtet ist.

Polymethylmethacrylat-Knochenzemente können in geeigneten Mischbechem mit Hilfe von Spateln durch Vermischen des Zementpulvers mit der Monomerflüssigkeit vermischt werden. Nachteilig ist an dieser Vorgehensweise, dass Lufteinschlüsse im gebildeten Zementteig vorhanden sein können, die später eine Destabilisierung des Knochenzementes verursachen können. Aus diesem Grund wird das Vermischen von Knochenzementpulver mit der Monomerflüssigkeit in Vakuummischsystemen bevorzugt, weil durch Mischen im Vakuum Lufteinschlüsse aus dem Zementteig weitgehend entfernt werden und damit eine optimale Zementqualität erreicht wird (Breusch, S.J. et al.: Der Stand der Zementiertechnik in Deutschland, Z. Orthop. 1999, 137: 101-07). Im Vakuum gemischte Knochenzemente haben eine deutlich verringerte Porosität und zeigen daher verbesserte mechanische Eigenschaften. Es wurden eine Vielzahl von Vakuumzementiersystemen offen gelegt, von denen exemplarisch folgende genannt sind: US 4,671,263, US 5,624186, US 6,033,105, EP 0 692 229 A1, EP 1 005 901 A2, EP 1 020 167 A2.

Eine Weiterentwicklung stellen Vakuumzementiersysteme dar, in denen sowohl das Zementpulver als auch die Monomerflüssigkeit bereits in separaten Kompartimenten der Mischsysteme verpackt sind und erst unmittelbar vor der Zementapplikation im Zementiersystem miteinander vermischt werden (US 5,997,544, EP 0 692 229 A1, US 6,709,149).

Bei den gegenwärtig genutzten Zementiersystemen wird mit Ausnahme von mit Elektromotoren betriebenen Mischsystemen die Vermischung der flüssigen Zementkomponente mit der pulverförmigen Komponente durch manuelle Betätigung eines Mischstabes mit einem Mischorgan, wie Mischrädem oder Mischflügel, vorgenommen. Bei der manuell betriebenen Vermischung hängt das Mischergebnis stark von der Durchführung des Mischvorgangs durch die jeweilige Person ab. Die eingesetzte Kraft der Person, die Anzahl der vertikalen Mischbewegungen, der Drehwinkel der Mischbewegungen, die maximale Auslenkung des Mischorgans in Richtung Kartuschenkopf und Kartuschenboden und die gesamte Mischzeit beeinflussen das Mischergebnis hinsichtlich der Homogenität des Zementteigs. Dadurch kann die Zementqualität im Vergleich zwischen unterschiedlichen medizinischen Anwendern deutlich schwanken. Wünschenswert ist daher die reproduzierbare Herstellung eines homogenen Zementteigs, wobei die Zementqualität völlig unabhängig von dem jeweiligen medizinischen Anwender sein soll, damit ein optimales Zementierergebnis möglich ist.

Der Erfindung liegt die Aufgabe zu Grunde, eine möglichst einfache Vorrichtung zu entwickeln, mit der Knochenzementteig zuverlässig in reproduzierbarer Qualität durch homogene Vermischung einer flüssigen Knochenzementkomponente mit einer pulverförmigen Knochenzementkomponente hergestellt werden kann.

Die Erfindung wurde durch den Anspruch 1 gelöst. Erfindungsgemäß ist eine Vorrichtung zum automatischen Mischen von Knochenzement mit einem Kolben in einem Kolbenraum, der den Kolbenraum in einen ersten Kolbenraumabschnitt und einen zweiten Kolbenraumabschnitt teilt und ein Absperrorgan aufweist, welches an den Kolbenumkehrpunkten umgeschaltet wird. Die Vorrichtung weist ferner einen Gasablass im ersten Kolbenraumabschnitt, ein elastisch rückstellendes Bauelement, wie zum Beispiel ein Federelement, das zwischen dem Kolben und der dem Kolben gegenüberliegende Wand des ersten Kolbenraumabschnitts angeordnet ist, einer Gaszuführung im zweiten Kolbenraumabschnitt, und eine Mischeinrichtung, welche mit dem Kolben verbunden ist, auf.

Die Erfindung beruht auf der Idee, durch Unter- oder Überdruck Vakuum oder durch komprimiertes Gas einen Kolben in einem Kolbenraum zu bewegen, wobei der Kolbenraum mit einem Kartuschenverschluss verbunden ist. Der Kolben ist mit einem axial beweglichen Stab über ein Rotationsgelenk formschlüssig oder kraftschlüssig so verbunden, dass eine Bewegung des Stabes um eine Achse unabhängig von einer Rotation des Kolbens möglich ist. Der Kolben enthält ein Absperrorgan, mit einem gasdurchlässigen Durchgang der den Raum oberhalb des Kolbens mit dem Raum unterhalb des Kolbens verbindet. In geschlossenem Zustand verschließt das Absperrorgan diesen Durchgang gasdicht. Das Absperrorgan wird an einem Umkehrpunkt des Kolbens vom geschlossenen in den offenen Zustand geschaltet, während er am anderen Umkehrpunkt vom offenen in den geschlossenen Zustand geschaltet wird. Durch Vakuum oder komprimiertes Gas wird der Kolben in Bewegung versetzt, so dass er sich in dem Kolbenraum hin- und herbewegt, und damit den Stab in eine Rotationsbewegung versetzt. Durch ein am Stab angebrachtes Mischorgan wird der Knochenzement gemischt.

Der Kolbenraum ist bevorzugt ein Hohlzylinder, dessen Enden gasdicht abgeschlossen sind. Im Kolbenraum ist ein Kolben angeordnet, der entlang der Zylinderachse beweglich ist und gasdicht an den Seitenwänden des Kolbenraums anliegt.

Das im Kolben angeordnete Absperrorgan weist mindestens einen Durchgang auf, der in offener Stellung den ersten Kolbenabschnitt auf einer Seite des Kolbens mit dem zweiten Kolbenraumabschnitt auf der anderen Seite des Kolbens gasdurchlässig verbindet und das in geschlossener Stellung beide Kolbenraumabschnitte gasdicht voneinander trennt.

Bevorzugt ist der Querschnitt des Durchgangs im Absperrorgan größer als der Querschnitt des Gasablasses. Ebenfalls ist bevorzugt, dass der Querschnitt des Durchgangs im Absperrorgan größer als der Querschnitt der Gaszuführung ist. Dadurch wird gewährleistet, dass ein vollständiger Druckausgleich mit der umgebenden Atmosphäre solange erfolgt, bis das Absperrorgan an den Kolbenumkehrpunkten umgeschaltet wird.

Bevorzugt handelt es sich bei dem Absperrorgan um ein Drehventil. Besonders bevorzugt wird das Drehventil durch zwei Stifte gesteuert, die am Außenumfang des Drehventils befestigt sind und ausgehend von der Drehachse des Drehventils in einem Winkel von <180° zueinander angeordnet sind. Das Drehventil wird von der geöffneten in die geschlossene Position und umgekehrt umgeschaltet, indem der Stift durch die Bewegung des Kolbens gegen eine Wand des Kolbenraums stößt. Dabei wird der Stift gegen den Kolben gedrückt und das Drehventil dreht sich um seine Achse und verstellt sich vom offenen Zustand in den geschlossenen oder umgekehrt.

Es sind jedoch auch andere Möglichkeiten denkbar. So kann auch ein verschiebbarer Verschluss, wie zum Beispiel ein an einer Seite verschlossener Hohlzylinder mit seitlichen Öffnungen durch Anschlagen an den Wänden des Kolbenraums in eine geöffnete und geschlossene Position verschoben werden.

Durch den Kolben wird der Kolbenraum in zwei Kolbenraumabschnitte unterteilt. Ein Kolbenraum ist mit einem Gasablass versehen, während der andere Kolbenraum eine Gaszuführung aufweist.

Der Kolben ist über ein Rotationsgelenk mit einem Stab verbunden, an dem eine Mischeinrichtung angebracht ist. Der Stab kann durch den Kolbenraumabschnitt geführt sein, der die Gaszuführung aufweist. Er kann aber auch durch den Kolbenraumabschnitt mit dem Gasablass geführt sein.

Der Gasablass befindet sich bevorzugt in der Nähe der Stirnwand des Kolbenraums. Ist die Mischeinrichtung durch die Kammer geführt, an die das komprimierte Gas angeschlossen ist, so ist der Gasablass besonders bevorzugt in die Stirnwand eingelassen.

Gleichfalls befindet sich auch die Gaszuführung bevorzugt in der Nähe der Stirnwand des Kolbenraums. Ist die Mischeinrichtung durch die Kammer geführt, an die das Vakuum angeschlossen ist, so ist die Gaszuführung besonders bevorzugt in die Stirnwand eingelassen.

In dem Kolbenraumabschnitt mit Gasablass ist zwischen Kolben und der dem Kolben gegenüberliegenden Wand ein elastisch rückstellendes Bauelement angeordnet. Bevorzugt handelt es sich bei dem elastisch rückstellenden Bauelement um ein Federelement, bevorzugt um eine Spiralfeder.

Im geschlossenen Zustand des Absperrorgans bewegt sich der Kolben durch die Kräfte, die durch Über- oder Unterdruck auf den Kolben ausgeübt werden. Dies bedeutet, dass sich der erste Kolbenraumabschnitt verkleinert, d.h. der Kolbenraumabschnitt mit dem Gasablass verkleinert. Trifft der Kolben auf die gegenüberliegende Wand des ersten Kolbenraumabschnitts, so wird das Absperrorgan in den offenen Zustand verstellt und es kann ein Druckausgleich erfolgen. Durch die Rückstellkraft des elastisch rückstellenden Bauelementes wird der Kolben in die entgegengesetzte Richtung bewegt. Dabei verkleinert sich der zweite Kolbenraumabschnitt, d.h. der Kolbenabschnitt mit der Gaszuführung. Der Kolben schlägt an der gegenüberliegenden Wand an und das Absperrorgan wird wieder geschlossen. Dieser Vorgang wiederholt sich solange Gas abgeführt oder zugeführt wird.

Dieser Vorgang wird durch sich abwechselnde Druckdifferenz und Druckausgleich in beiden Kolbenraumabschnitten bewirkt. Dabei ist die Druckdifferenz von entscheidender Bedeutung, es ist unerheblich, ob auf der Seite der Gaszuführung, ein Überdruck angelegt wird, oder ob auf der Seite des Gasablasses ein Unterdruck angelegt wird. Bevorzugt wird auf der Seite des Gasablasses ein Unterdruck angelegt, da Vakuum, das auch zum Entgasen des Knochenzements dient, bereits vorhanden ist.

Der Kolben ist über ein Verbindungselement, wie zum Beispiel einen Stab mit einer Mischeinrichtung verbunden. Bevorzugt ist der Stab drehbar, zum Beispiel über ein Rotationsgelenk, wie ein Torsionsgelenk oder Kugelgelenk. Der Stab kann zum Beispiel mit einem steilen Gewindegang versehen sein, das mit einem Zapfen in Eingriff steht.

Der Stab ist durch einen Kartuschenverschluss geführt, der eine Öffnung mit einem Durchmesser besitzt, die dem Außendurchmesser des Stabes entspricht. In dieser Öffnung ist der Stab axial beweglich angeordnet.

Der Stab hat bevorzugt mindestens ein steiles Gewinde, in das ein Zapfen greift, der in der Öffnung des Kartuschenverschlusses unbeweglich angeordnet ist. Während der axialen Kolbenbewegung bewegt sich der verbundene Stab mit. Gleichzeitig dreht sich der Stab durch den Eingriff des unbeweglichen Zapfens in das Gewinde um seine Achse zu drehen. Dadurch führt die am Ende des Stabes angeordnete Mischeinrichtung ebenfalls gleichzeitig eine lineare, axiale Bewegung und eine Drehbewegung aus. Durch diese kombinierten Bewegungen wird der Knochenzement vermischt.

Der Stab sollte so lang sein, dass das Mischorgan den Kartuschenboden berührt, damit auch am Kartuschenboden der Knochenzement vermischt wird. Bevorzugt kann der Stab im Kolben soweit in Richtung des geschlossenen Endes bewegt werden, dass das Mischorgan mit seiner Oberseite an der Unterseite des Kartuschenverschlusses anliegt. Dadurch können durch das Mischorgan auch Zementreste an der Unterseite des Kartuschenverschlusses sicher abgestreift werden. Vorteilhaft ist es, wenn das Mischorgan mit seinem äußeren Rand an der Innenseite der Kartusche anliegt.

Erfindungsgemäß erfolgt die Vermischung ohne manuelle Krafteinwirkung durch eine Vakuum-getriebene oder Druck-getriebene Antriebseinheit. Gegenwärtig marktübliche Zementiersysteme enthalten Vakuumpumpen, die ein Vakuum bis zu 100-150 mbar erzeugen. Die erfindungsgemäße Vorrichtung kann dieses Vakuum von ungefähr 150 mbar für den Antrieb nutzen.

Die Vorrichtung wird zum Vermischen von Polymethylmethacrylat-Knochenzementen und von anorganischen Knochenzementen verwendet, die als Hauptbestandteile Calciumphosphat und/oder Calciumsulfat enthalten. Dabei kommen besonders Calciumphosphatzemente auf Basis von amorphen Calciumphosphat, α-Tricalciumphosphat, ß-Tricalciumphosphat, Tetracalciumphosphat, Brushit, Monetit und Octacalciumphosphat sowie deren Gemischen in Betracht. Die Calciumsulfat-Knochenzemente basieren auf Calciumsulfat-Hemihydrat.

Im Folgenden wird die Erfindung anhand der beiliegenden Zeichnungen beispielhaft erläutert. Es zeigen:
Fig 1 einen Ausschnitt aus einer ersten Ausführungsform der Erfindung im Schnitt, und
Fig 2 einen Ausschnitt aus einer zweiten Ausführungsform der Erfindung im Schnitt.

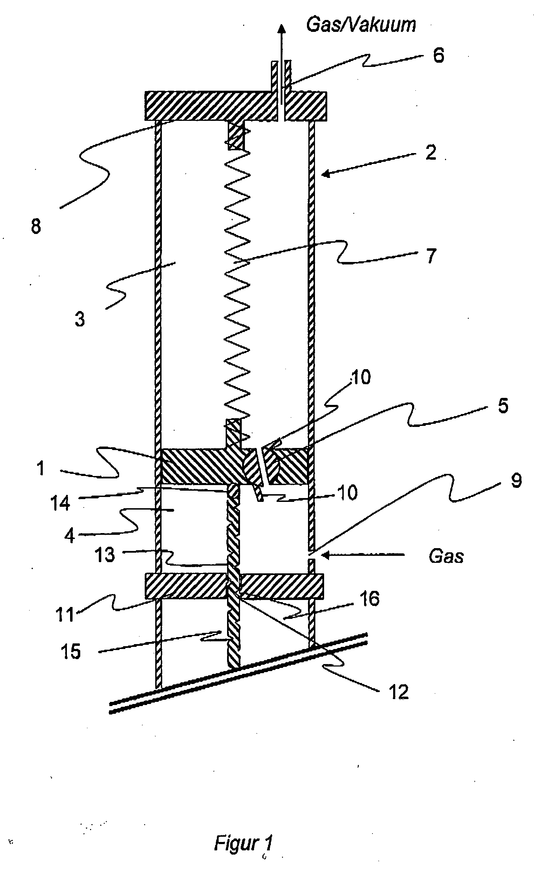

In Figur 1 ist ein Antrieb für eine Mischeinrichtung dargestellt, der einen Hohlzylinder mit einem Kolbenraum 2 enthält. In diesem Hohlzylinder ist ein Kolben 1 angeordnet, der durch Vakuum oder komprimiertes Gas bewegt wird. Der Kolben teilt den Kolbenraum 2 in zwei Kolbenraumabschnitte 3,4. Der erste Kolbenraumabschnitt 3 weist einen Gasablass 6 auf.

In dem Kolben 1 ist ein Drehventil 5 angeordnet, das im geöffneten Zustand beide Kolbenraumabschnitte 3,4 miteinander verbindet. In geschlossenem Zustand sind die beiden Kolbenraumabschnitte 3,4 gasdicht voneinander getrennt. Zwischen der Innenwand 8 der Hohlzylinderkappe und dem Kolben 1 ist ein Federelement 7 angeordnet, das den Kolben im entspannten Zustand gegen die dem Kolben gegenüberliegende Wand des zweiten Kolbenraumabschnitts 4 drückt.

Wird nun Vakuum an den ersten Kolbenraumabschnitt angelegt und das Drehventil befindet sich in geschlossenem Zustand, so wird ein Druckunterschied zwischen beiden kolbenraumabschnitten 3 und 4 aufgebaut. Im zweiten Kolbenraumabschnitt 4 liegt ein höherer Druck vor als im ersten Kolbenraumabschnitt 3. Durch diesen Druckunterschied wird der Kolben 1 gegen die Kraft des Federelementes 7 auf die gegenüberliegende Wand 8 des ersten Kolbenraumabschnitts zubewegt. Schlägt der Stift 10 gegen die Wand 8, so wird er gegen den Kolben 1 gedrückt und das Drehventil 5 bewegt sich in die offene Position. Es erfolgt ein Druckausgleich zwischen den beiden Kolbenraumabschnitten 3 und 4. Der Überdruck im zweiten Kolbenraumabschnitt wird abgebaut und der Kolben 1 bewegt sich durch Rückstellkraft des Federelementes 7 in Richtung Kartusche (in der Zeichnung nach unten). Dort schlägt der zweite Stift gegen die andere dem Kolben gegenüberliegende Wand des zweiten Kolbenraumabschnitts 4. Dadurch wird das Drehventil 5 wieder umgestellt, diesmal in die geschlossene Position. Bei geschlossenem Drehventil 5 kann sich wieder ein Druckunterschied aufbauen, der den Kolben 1 wieder nach oben bewegt. Dieser Vorgang wiederholt sich solange Vakuum angelegt ist.

Durch die Auf- und Abbewegung wird ein Stab 13, der über ein Rotationsgelenk 14 an dem Kolben 1 befestigt ist, ebenfalls auf- und abbewegt. In den Stab 13 ist ein Gewinde 15 eingelassen, in das Zapfen 16 greifen, die in einer Öffnung 12 der Kartuschenabdeckung 11 angeordnet sind. Durch die Auf-und Abbewegung des Stabes 13 und das Gewinde 15, das mit den Zapfen16 in Eingriff steht, wird der Stab gleichzeitig in Rotation versetzt.

Mit einer am Stab 13 angebrachten Mischeinrichtung (nicht dargestellt), die sich ebenfalls auf und ab bewegt und gleichzeitig rührt, kann somit Knochenzement wirkungsvoll vermischt werden.

Eine solche Antriebsvorrichtung kann anstelle von Vakuum auch mit Hilfe von Gasüberdruck angetrieben werden. In diesem Fall wird über den Gasanschluss 9 ein Überdruck angelegt, während am Gasablass 6 Normaldruck herrscht. Bei geschlossenem Ventil bewegt sich der Kolben 1 in Richtung nach oben (siehe Figur 1). Die Arbeitsweise des Antriebs entspricht genau dem oben beschriebenen.

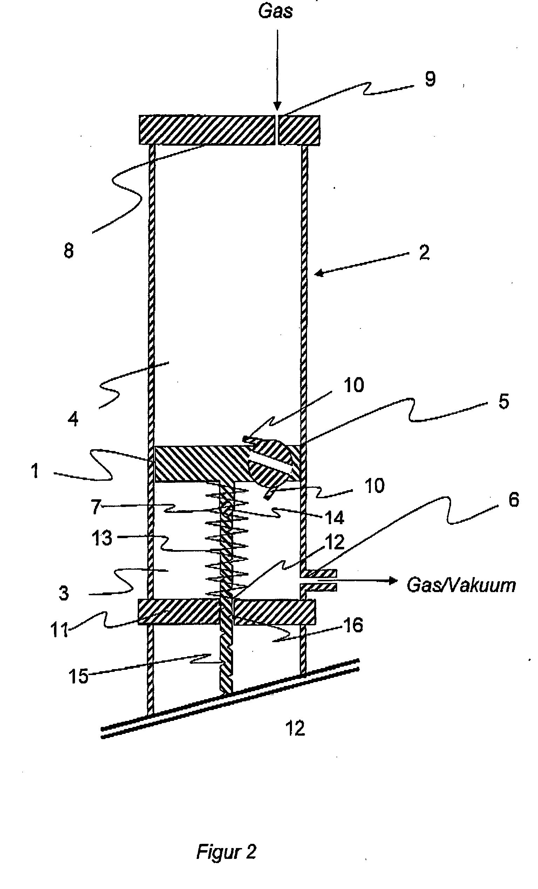

In Figur 2 ist ebenfalls ein Antrieb für eine Mischeinrichtung dargestellt, der einen Hohlzylinder mit einem Kolbenraum 2 enthält. Auch dieser Kolben 1 kann durch Vakuum oder komprimiertes Gas bewegt werden und teilt den Kolbenraum 2 in einen ersten Kolbenraumabschnitt 3 und einen zweiten Kolbenraumabschnitt 4. Der erste Kolbenraumabschnitt 3, der in dieser Figur unterhalb des zweiten Kolbenraumabschnitts 4 angeordnet ist, weist einen Gasablass 6 auf.

In dem Kolben 1 ist ein Drehventil 5 angeordnet, das im geöffneten Zustand beide Kolbenraumabschnitte 3,4 miteinander verbindet. In geschlossenem Zustand sind die beiden Kolbenraumabschnitte 3,4 gasdicht voneinander getrennt.

Im ersten Kolbenraumabschnitt 3 ist ein Federelement 7 zwischen dem Kolben 1 und der Kartuschenabdeckung 11 angeordnet Dieses Federelement 7 drückt den Kolben 1 im entspannten Zustand gegen die dem Kolben 1 gegenüberliegende Wand 8 des zweiten Kolbenraumabschnitts 4.

Wird nun Vakuum an den ersten Kolbenraumabschnitt 3 angelegt und das Drehventil 5 befindet sich in geschlossenem Zustand, so wird ein Druckunterschied zwischen beiden Kolbenraumabschnitten 3 und 4 aufgebaut. Im zweiten Kolbenraumabschnitt 4 liegt ein höherer Druck vor als im ersten Kolbenraumabschnitt 3. Durch diesen Druckunterschied wird der Kolben 1 gegen die Kraft des Federelementes 7 auf die Kartuschenabdeckung 11 zubewegt. Schlägt der Stift 10 gegen die Kartuschenabdeckung 11, so wird er auf den Kolben 1 zu bewegt und das Drehventil 5 bewegt sich in die offene Position. Es erfolgt ein Druckausgleich zwischen den beiden Kolbenraumabschnitten 3 und 4. Der Überdruck im zweiten Kolbenraumabschnitt 4 wird abgebaut und der Kolben 1 bewegt sich durch Rückstellkraft des Federelementes 7 in Richtung Wand 8 (in der Zeichnung nach oben). Dort schlägt der zweite Stift gegen die Wand 8 des zweiten Kolbenraumabschnitts 4. Dadurch wird das Drehventil 5 wieder umgestellt, diesmal in die geschlossene Position, Bei geschlossenem Drehventil 5 kann sich wieder ein Druckunterschied aufbauen, der den Kolben 1 wieder nach unten bewegt. Dieser Vorgang wiederholt sich, solange Vakuum angelegt ist.

Durch die Auf- und Abbewegung wird ein Stab 13, der über ein Rotationsgelenk 14 an dem Kolben 1 befestigt ist, ebenfalls auf- und abbewegt. In den Stab 13 ist ein Gewinde 15 eingelassen, in das Zapfen 16 greifen, die in einer Öffnung 12 der Kartuschenabdeckung 11 angeordnet sind. Durch die Auf-und Abbewegung des Stabes 13 und das Gewinde 15, das mit den Zapfen16 in Eingriff steht, wird der Stab gleichzeitig in Rotation versetzt.

Mit einer am Stab 13 angebrachten Mischeinrichtung (nicht dargestellt), die sich ebenfalls auf-und ab bewegt und gleichzeitig rührt, kann somit Knochenzement wirkungsvoll vermischt werden.

Auch diese Antriebsvorrichtung kann anstelle mit Vakuum auch mit Hilfe von Gasüberdruck angetrieben werden. In diesem Fall wird über den Gasanschluss 9 ein Überdruck angelegt, während am Gasablass 6 Normaldruck herrscht. Bei geschlossenem Ventil bewegt sich der Kolben 1 in Richtung nach unten (siehe Figur 2).

### Bezugszeichenliste

- 1: Kolben
- 2: Kolbenraum
- 3: Erster Kolbenraumsbschnitt
- 4: Zweiter Kolbenraumabschnitt
- 5: Absperrorgan, Drehventil
- 6: Gasablass
- 7: elastisch rückstellendes Bauelement, Federelement
- 8: Wand
- 9: Gaszuführung
- 10: Stifte
- 11: Kartuschenabdeckung
- 12: Öffnung
- 13: Stab
- 14: Rotationsgelenk
- 15: Gewinde
- 16: Zapfen

## Patentansprüche

1. Vorrichtung zum automatischen Mischen von Knochenzement,
**gekennzeichnet durch**
einen Kolben (1) in einem Kolbenraum (2), der den Kolbenraum (2) in einen ersten Kolbenraumabschnitt (3) und einen zweiten Kolbenraumabschnitt (4) teilt und ein Absperrorgan (5) aufweist, welches an den Kolbenumkehrpunkten umgeschaltet wird und in geöffnetem Zustand, den ersten Kolbenraumabschnitt (3) mit dem zweiten Kolbenraumabschnitt (4) verbindet,
einen Gasablass (6) im ersten Kolbenraumabschnitt (3),
ein elastisch rückstellendes Bauelement (7), das zwischen dem Kolben (1) und
der dem Kolben gegenüberliegende Wand (8, 11) des ersten Kolbenraumabschnitts (3) angeordnet ist,
eine Gaszuführung (9) im zweiten Kolbenraumabschnitt (4), und
eine Mischeinrichtung, welche mit dem Kolben (1) verbunden ist.

2. Vorrichtung nach Anspruch 1, **dadurch gekennzeichnet, dass**
am Gasablass (6) Vakuum angeschlossen ist.

3. Vorrichtung nach Anspruch 1, **dadurch gekennzeichnet, dass**
durch die Gaszuführung (9) komprimiertes Gas zugeführt werden kann.

4. Vorrichtung nach einem der vorhergehenden Ansprüche, **gekennzeichnet durch** ein Drehventil als Absperrorgan (5).

5. Vorrichtung nach Anspruch 4, **dadurch gekennzeichnet, dass**
zwei Stifte (10) am Außenumfang des Drehventils befestigt sind, die ausgehend von der Drehachse des Drehventils in einem Winkel von <180° zueinander angeordnet sind.

6. Vorrichtung nach einem der vorhergehenden Ansprüche, **dadurch gekennzeichnet, dass**
ein Verbindungselement (13) zwischen Kolben (1) und Mischeinrichtung durch den zweiten Kolbenraumabschnitt (4) geführt ist.

7. Vorrichtung nach einem der Ansprüche 1 bis 3,
**dadurch gekennzeichnet, dass**
ein Verbindungselement (13) zwischen Kolben (1) und Mischeinrichtung durch den ersten Kolbenraumabschnitt (3) geführt ist.

8. Vorrichtung nach einem der Ansprüche 6 oder 7, **dadurch gekennzeichnet, dass** das Verbindungselement (13) ein Stab mit einem Gewinde (15) ist, der über ein Rotationsgelenk (14) mit dem Kolben (1) verbunden ist, wobei das Gewinde (15) mit feststehenden Zapfen (16) in Eingriff steht.

9. Vorrichtung nach einem der vorhergehenden Ansprüche,
**dadurch gekennzeichnet, dass**
der Querschnitt des Durchlasses im Absperrorgan (5) größer ist als der Querschnitt des Gasablass (6).

10. Vorrichtung nach einem der vorhergehenden Ansprüche,
**dadurch gekennzeichnet, dass**
der Querschnitt des Durchlasses im Absperrorgan (5) größer ist als der Querschnitt der Gaszuführung (9).

## Claims

1. Apparatus for automatic mixing of bone cement,
**characterised by**
a plunger (1) in a plunger space (2) that sub-divides the plunger space (2) into a first plunger space section (3) and a second plunger space section (4) and comprising a shut-off device (5), which is switched at the plunger motion reversion points and, in open condition, connects the first plunger space section (3) to the second plunger space section (4),
a gas drain (6) in the first plunger space section (3),
an elastic restoring component (7) arranged between the plunger (1) and the wall (8, 11) of the first plunger space section (3) that is opposite to the plunger,
a gas feed (9) in the second plunger space section (4), and
a mixing facility that is connected to the plunger (1).

2. Apparatus according to claim 1, **characterised in that**
a vacuum is applied to the gas drain (6).

3. Apparatus according to claim 1, **characterised in that**
compressed gas can be supplied through the gas feed (9).

4. Apparatus according to any one of the preceding claims, **characterised by**
a rotary valve as shut-off device (5).

5. Apparatus according to claim 4, **characterised in that**
two pins (10) are affixed to the outer circumference of the rotary valve and, originating from the rotary axis of the rotary valve, are arranged at an angle of < 180 ° with respect to each other.

6. Apparatus according to any one of the preceding claims, **characterised in that**
a connecting element (13) is routed through the second plunger space section (4) between plunger (1) and mixing facility.

7. Apparatus according to any one of the claims 1 to 3,
**characterised in that**
a connecting element (13) is routed through the first plunger space section (3) between plunger (1) and mixing facility.

8. Apparatus according to any one of the claims 6 or 7, **characterised in that**
the connecting element (13) is a rod having a thread (15) that is connected to the plunger (1) via a rotary hinge (14), hereby the thread (15) engages fixed pegs (16).

9. Apparatus according to any one of the preceding claims,
**characterised in that**
the cross-section of the passage in the shut-off device (5) is larger than the cross-section of the gas drain (6).

10. Apparatus according to any one of the preceding claims,
**characterised in that**
the cross-section of the passage in the shut-off device (5) is larger than the cross-section of the gas feed (6).

## Revendications

1. Dispositif destiné au mélange automatique de ciment osseux, **caractérisé par** un piston (1) dans un espace de piston (2) qui divise l'espace de piston (2) en un premier tronçon d'espace de piston (3) et un second tronçon d'espace de piston (4) et présente un organe d'arrêt (5), lequel est commuté aux points d'inversion du piston et, dans l'état ouvert, relie le premier tronçon d'espace de piston (3) au second tronçon d'espace de piston (4),
un échappement des gaz (6) dans le premier tronçon d'espace de piston (3), un élément de construction élastique à rappel (7) qui est disposé entre le piston (1) et la paroi (8, 11) face au piston du premier tronçon d'espace de piston (3),
une amenée de gaz (9) dans le second tronçon d'espace de piston (4), et un dispositif de mélange qui est relié au piston (1).

2. Dispositif selon la revendication 1, **caractérisé en ce que** du vide est raccordé à l'échappement des gaz (6).

3. Dispositif selon la revendication 1, **caractérisé en ce que** du gaz comprimé peut être amené via l'amenée de gaz (9).

4. Dispositif selon l'une des revendications précédentes, **caractérisé par** une soupape rotative en tant qu'organe d'arrêt (5).

5. Dispositif selon la revendication 4, **caractérisé en ce que** deux broches (10) sont fixées sur le pourtour extérieur de la soupape rotative, lesquelles sont disposées dans un angle < 180° l'une par rapport à l'autre en partant de l'axe de rotation de la soupape rotative.

6. Dispositif selon l'une des revendications précédentes, **caractérisé en ce qu'**un élément de liaison (13) est dirigé entre le piston (1) et le dispositif de mélange par le second tronçon d'espace de piston (4).

7. Dispositif selon l'une des revendications 1 à 3, **caractérisé en ce qu'**un élément de liaison (13) est dirigé entre le piston (1) et le dispositif de mélange par le premier tronçon d'espace de piston (3).

8. Dispositif selon l'une des revendications 6 ou 7, **caractérisé en ce que** l'élément de liaison (13) est une tige comprenant un filetage (15) qui est reliée au piston (1) par une articulation rotative (14), sachant que le filetage (15) est en prise avec des tiges fixes (16).

9. Dispositif selon l'une des revendications précédentes, **caractérisé en ce que** la section du passage dans l'organe d'arrêt (5) est plus grande que la section de l'échappement des gaz (6).

10. Dispositif selon l'une des revendications précédentes, **caractérisé en ce que** la section du passage dans l'organe d'arrêt (5) est plus grande que la section de l'amenée de gaz (9).
